# EUROPEAN PATENT APPLICATION

(11) **EP 1 946 634 A1**
(43) Date of publication of application: **23.07.2008**
(21) Application number: 07100675.3
(22) Date of filing: 17.01.2007
(51) Int. Cl.: A01G 9/22

(54) **System for controlling incident light**

(71) Applicant: Nederlandse Organisatie voor toegepast- natuurwetenschappelijk onderzoek TNO, 2628 VK The Hague (NL)
(72) Inventor: Ruigrok, Jan, 2600 AA Delft (NL); Oppedijk, Bernard Johan, 1507 HB Zaandam (NL)
(74) Representative: van Loon, C.J.J.

(57) **Abstract**

System for controlling incident light (2) into a conditioned room (1) like e.g. a greenhouse, via a number of translucent panels (3). Screening means are provided which comprise an opaque liquid layer (4) supplied to the respective panels by controllable streaming means (5) and flowing via one or both surfaces of the panel towards drain means (6). The opaque liquid layer may be a mixture of water and e.g. chalk or lime. Control means (10) may be provided for controlling the streaming means in dependency of values like e.g. light, temperature, moisture content, CO2 content etc. inside and/or outside the conditioned room, measured by detection means (11).

## Description

### Field of the invention

The invention concerns a system for controlling incident light into a conditioned room, like e.g. a greenhouse.

### Background of the invention

During the summer months the ventilation windows etc. of greenhouses often have to be opened at maximum in order to keep the inside temperature at the right level. By such ventilation, however, the CO2 level will often drop to hardly above the atmospheric level. The effect of this could be illustrated by the following example: outside the summer months 1 kilo of cucumbers can be harvested requiring 2800 Joule of external radiation, while during the summer months 4500 Joule may be required for 1 kilo. During the summer thus the CO2 level is an important restricting factor for the harvest.

One additional aspect is that PAR (Photosynthetically Active Radiation) light is used insufficiently. Another aspect is that present screening systems are too slow to react to the dynamics during half-clouded days.

A new dynamic screening should comprise folowing features:
- during the summer months no more than 20% ventilation by means of greenhouse windows should be required;
- the dynamic behaviour of half-clouded days should be smoothed;
- on days having not much sun radiation (winter days, cloudy summer days) no substantial amount of light should be captured by the system;
- a new system should be applicable to existing greenhouses.

### Summary of the invention

The present invention aims to provide a system which fulfills the preferred requirements as stated above. According to the invention it is preferred to provide a system for controlling incident light into a conditioned room, like e.g. a greenhouse, via a number of translucent panels or walls, hereinafter called panels, comprising screening means which comprise a relatively opaque - e.g. light scattering, light absorbing or light reflecting - liquid layer supplied to the respective panels by controllable streaming means, the liquid layer flowing from the streaming means towards drain means, and the streaming means, panels and drain means being arranged so that in use the liquid layer flows from the streaming means to the drain means via at least one surface, the outside and/or the inside of the panels.

Preferably, the streaming means, panels and drain means are arranged so that in use the liquid layer flows from the streaming means to the drain means via the outside surface of the panels. However, as stated, it may be preferred that, e.g. additionally, the liquid layer flows from the streaming means to the drain means via the inside surface of the panels.

It is envsiaged that it will be preferred that at least part of the panels are located on a roof of the conditioned room, as most of the incident light will come from above, viz. from the sun.

The roof may comprise at least one - in many cases two - inclined roof part including the respective panels and the streaming means are located at the upper side of the roof. The drain means may reside at the lower side of the inclined roof, or still lower, e.g. at the ground level of the conditioned room (e.g. greenhouse).

The streaming means may preferrably comprise a tube in parallel with the upper side or ridge of the roof. When the roof includes two inclined roof parts, e.g. more or less having the shape of a saddle roof, two tubes may be installated on either side of the roof ridge, each streaming tube pouring out its liquid to one inclined roof half, via the translucent roof panel(s) towards the downsided drain means.

The relatively opaque liquid layer preferrably comprises or is based on water and may comprise a compound or mixture of water and at least one agent. For example such an agent may comprise chalk, or lime.

The system presented here preferrably comprises control means for controlling the streaming means, as well as detection means for measuring relevant values like e.g. light, temperature, moisture content, CO2 content etc. inside and/or outside the conditioned room. The preferred control means may be arranged for controlling the controllable streaming means in dependency of one or more of the values measured by the detection means.

After the liquid has been collected by the drain means - e.g. gutters, drains etc. - the liquid may be cleaned and/or recondioned, buffered and - under control of the control means - repumped to the streaming means.

Advantages of the system according to the invention include:
- Quick response to varying weather conditions.
- Dynamically
- Minor adaptions required to the exiting building (e.g. greenhouse).
- Double cooling effect, viz. both by screening from the heat/light source (the sun) and by cooling the surface(s) of the panel(s).

Below are listed some estimated advantages:
- Increased CO2 concentration: +15%
- Decreased light intensity: - 5%
- Total production increase: 10%
- Extra income 2 €/m² in summer period
- Estimated gas savings / CO2
- 20% ventilation: 100 kg/hr CO2
- 100% ventilation: 170 kg/hr CO2
- Saving by reduction of CO2 loss open air
- Extra usage by increased Co2 comsumption of the plants
- Saving by less ventilation: 0,36 €/m²
- Increased plant usage: -0,06 €/m²

### Exemplary Embodiment

Figure 1 shows an exemplary embodiment of a system according the invention.
Figure 2 shows a slightly modified embodiment.

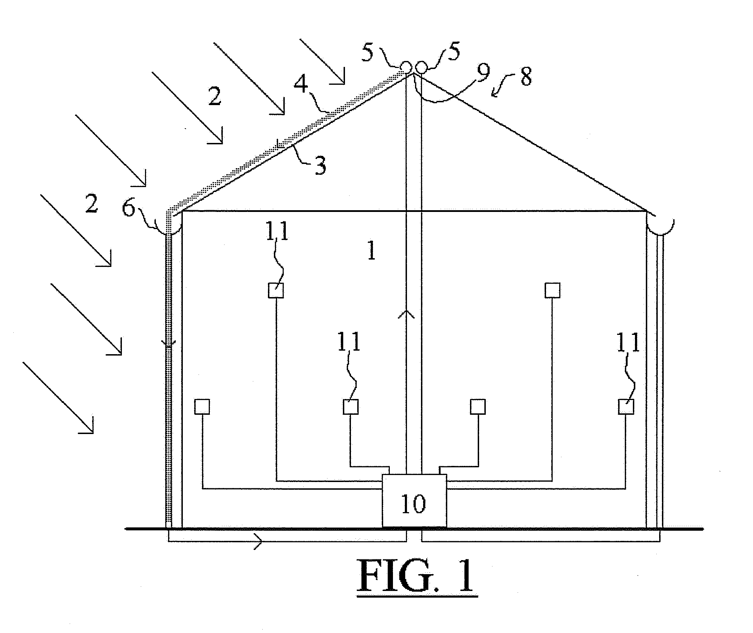

Figure 1 shows a greenhouse 1, upon which sun light 2 may incide via a number of translucent panels or walls, for a main part via its translucent - e.g. glass - roof panels 3. For reasons given in the preceding, the greenhouse 1 has to use screening means to control or manage the amount of incident sun light 2.

In figure 1 the screening means comprise a relatively opaque liquid layer 4 supplied to the respective panels by controllable streaming means 5, the liquid layer flowing from the streaming means towards drain means 6, and the streaming means 5, panels 3 and drain means 6 being arranged so that in use the liquid layer flows from the streaming means to the drain means via at least one surface of the panels. In figure 1 the streaming means, panels and drain means are arranged so that in use the liquid layer flows from the streaming means to the drain means via the outside surface of the panels, located on the roof 8 of the greenhouse 1.

In figure 1 the roof 8 comprises two inclined roof parts including the translucent panels 3; the streaming means 5 are located at the upper side of the roof 8. The streaming means in this embodiment are formed of a tube 5, extending in parallel with the upper side or ridge 9 of the roof 8 and being perforated to the declining side thus enabling that the liquid can be poured out towards to (only) one declined roof part.

The opaque liquid layer may be based on water, compounded or mixted with one or more agents, e.g. mixt with chalk or lime, thus forming a nice white liquid layer which can be spread over the roof 8 if required, which may be judged by the greenhouse staff, manually operating the system e.g. bij starting a pump and/or opening relevant valves.

It is preferred, however, that the system will be operated by automatic, e.g. computerized control means 10. The control means 10 are arranged to control the streaming means 5 by controlling pumps and/or valves (not shown) and thus feeding the streaming tubes 5. Moreover, the control means 10 are connected with detection means for measuring relevant values like e.g. light, temperature, moisture content, CO2 content etc. inside and/or outside the greenhouse 1. In that way the control means are arranged for controlling the controllable streaming means in dependency of one or more of the values measured by the detection means.

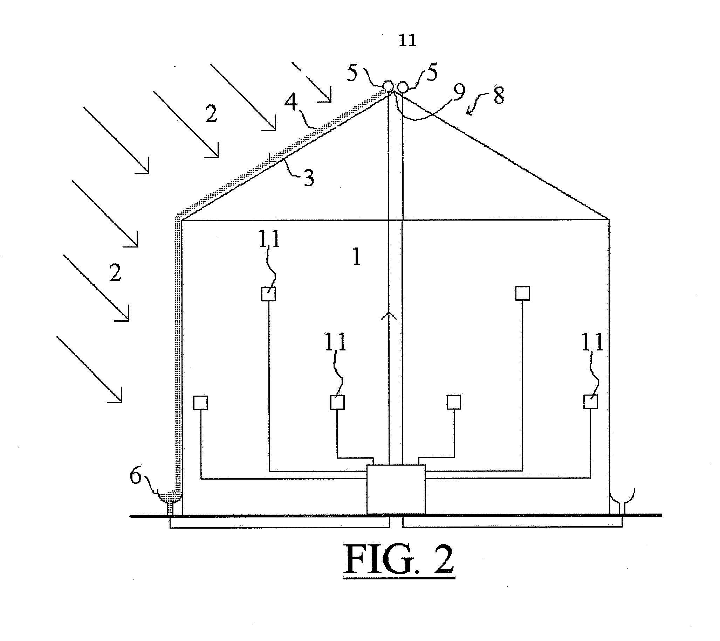

In figure 2 the drain 6 is located at the lower side of the translucent side panels, enabling that the liquid layer 4 also flows along the translucent side walls, thus also shielding (and colling) the side walls by means of the opaque liquid 4 supplied to those panels by the streaming relevant tube 5.

## Claims

1. System for controlling incident light (2) into a conditioned room (1), like e.g. a greenhouse, via a number of translucent panels or walls, hereinafter called panels (3), comprising screening means which comprise a relatively opaque liquid layer (4) supplied to the respective panels by controllable streaming means (5), the liquid layer flowing from the streaming means towards drain means (6), and the streaming means, panels and drain means being arranged so that in use the liquid layer flows from the streaming means to the drain means via at least one surface of the panels.

2. System according to claim 1, wherin the streaming means, panels and drain means being arranged so that in use the liquid layer flows from the streaming means to the drain means via the outside surface of the panels.

3. System according to claim 2, wherein at least part of the panels are located on a roof (8) of the conditioned room.

4. System according to claim 3, wherein the roof comprises at least one inclined roof part including the respective panels and the streaming means are located at the upper side of the roof.

5. System according to claim 4, the streaming means comprising a tube in parallel with the upper side or ridge (9) of the roof.

6. System according to claim 1, wherein the relatively opaque liquid layer comprises or is based on water.

7. System according to claim 6, the relatively opaque liquid layer comprising a compound or mixture of water and at least one agent.

8. System according to claim 7, one agent comprising chalk.

9. System according to claim 7, one agent comprising lime.

10. System according to claim 1, comprising control means (10) for controlling the streaming means, as well as detection means (11) for measuring relevant values like e.g. light, temperature, moisture content, CO2 content etc. inside and/or outside the conditioned room, and the control means being arranged for controlling the controllable streaming means in dependency of one or more of the values measured by the detection means.
